# FASCICULE DE BREVET EUROPEEN

(11) **EP 2 830 736 B1**
(45) Date de publication et mention de la délivrance du brevet: **19.08.2020**
(21) Numéro de dépôt: 13714267.5
(22) Date de dépôt: 02.04.2013
(51) Int. Cl.: B01D 15/08, B01J 20/26, B01J 20/285, B01J 20/291, B01J 20/30, B01D 53/02, C02F 1/28, C09K 3/32, G01N 1/22

(54) **MATÉRIAUX ABSORBANTS/SOLUBILISANTS À BASE D'ORGANOGELS MICROPOREUX**
ABSORBIERENDE/SOLUBILISIERENDE MATERIALIEN AUF DER BASIS VON MIKROPORÖSEN ORGANOGELEN
ABSORBENT/SOLUBILIZING MATERIALS BASED ON MICROPOROUS ORGANOGELS

(30) Priorité: 30.03.2012 FR 1252902; 03.07.2012 US 201261667642 P
(43) Date de publication de la demande: 04.02.2015
(73) Titulaire: Centre National de la Recherche Scientifique (C.N.R.S.), 75016 Paris (FR)
(72) Inventeur: PEREZ, Emile, F-31770 Colomiers (FR); FRANCESCHI-MESSANT, Sophie, F-31320 Pechbusque (FR); RICO-LATTES, Isabelle, F-31650 Auzielle (FR); GARRIGUES, Jean-Christophe, F-31300 Toulouse (FR)
(74) Mandataire: Novagraaf Technologies
(86) Numéro de dépôt international: PCT/EP2013/056930
(87) Numéro de publication internationale: WO 2013/144370

(56) Documents cités:
- EP-A1- 1 566 213
- CN-A- 102 139 203
- FR-A1- 2 886 867
- JP-A- 2012 046 596
- VENDITTI ET AL: "Removal of chromate from water by a new CTAB-silica gelatin composite", JOURNAL OF COLLOID AND INTERFACE SCIENCE, ACADEMIC PRESS, NEW YORK, NY, US, vol. 310, no. 2, 27 avril 2007 (2007-04-27), pages 353-361, XP022057030, ISSN: 0021-9797, DOI: 10.1016/J.JCIS.2007.02.019
- VENDITTI F ET AL: "Effects of sulfate ions and slightly acidic pH conditions on Cr(VI) adsorption onto silica gelatin composite", JOURNAL OF HAZARDOUS MATERIALS, ELSEVIER, AMSTERDAM, NL, vol. 173, no. 1-3, 15 janvier 2010 (2010-01-15), pages 552-557, XP026782498, ISSN: 0304-3894, DOI: 10.1016/J.JHAZMAT.2009.08.121 [extrait le 2009-08-31]
- SIBAPRASAD MAITY ET AL: "Fabrication of nanoporous material from a hydrophobic peptide", CRYSTENGCOMM, vol. 13, no. 8, 1 janvier 2011 (2011-01-01), page 3064, XP055041710, ISSN: 1466-8033, DOI: 10.1039/c0ce00701c
- LUKYANOVA L ET AL: "Preparation and evaluation of microporous organogel scaffolds for cell viability and proliferation", COLLOIDS AND SURFACES. B, BIOINTERFACES, ELSEVIER, AMSTERDAM, NL, vol. 79, no. 1, 1 August 2010 (2010-08-01) , pages 105-112, XP027053820, ISSN: 0927-7765 [retrieved on 2010-04-08]

## Description

La présente invention concerne l'utilisation nouvelle d'organogels microporeux en tant qu'adsorbants et solubilisants dans le domaine de la capture de fluides.

Avant de pouvoir procéder à leur analyse, les fluides regroupant de par leur définition des gaz ou des liquides doivent être capturés. Les domaines d'applications sont divers et variés et on peut citer, par exemple l'analyse d'agents polluants ou d'agents parfumant se présentant sous formes de composés volatils ou non.

Néanmoins, les matériaux adsorbants utilisés de nos jours sont très rapidement saturés en surface ce qui empêche la capture de fluides en quantité importante.

De plus, les adsorbants poreux disponibles à l'heure actuelle sont d'origine minérale (charbon activé, zéolithe, argiles) ou des polymères synthétiques. Les produits captés sont difficiles à récupérer et la densité, la porosité et la polarité de ces matériaux ne sont pas ajustables.

Ces matériaux sont également difficiles à régénérer entraînant des coûts d'utilisation élevés.

Au surplus, il existe aujourd'hui un réel besoin de développer de nouveaux matériaux dans le domaine de la capture de fluides.

Or, de manière surprenante, la Demanderesse a mis en évidence l'utilisation d'organogels microporeux dans le domaine de l'adsorption de fluides, pouvant ainsi être efficacement appliquée dans la capture de fluides en raison de leur capacité à solubiliser les fluides adsorbés.

Un matériau poreux est défini comme un matériau permettant l'écoulement d'un fluide, tel qu'un liquide ou un gaz, à travers des pores ou des interstices du matériau. La porosité est une caractéristique essentielle pour l'utilisation des organogels selon la présente invention en contribuant à l'adsorption et à la solubilisation des fluides.

Tous les gels ne sont cependant pas des matériaux poreux et ne peuvent ainsi pas donner lieu au phénomène d'adsorption poreuse et de solubilisation contrairement aux organogels poreux selon la présente invention.

La demande de brevet JP2012-46596 décrit des gels obtenus par réticulation de l'alcool polyvinylique avec un acide boronique fonctionnalisé pour fixer l'acide phosphorique, ainsi que l'utilisation de ces gels pour le traitement de l'eau. Cette demande ne décrit donc pas l'utilisation d'un organogel microporeux pour la capture de fluides par absorption et/ou pour la libération contrôlée de fluides après solubilisation.

Par ailleurs, la publication scientifique de Venditti et al « Removal of chromate from water by a new CTAB - silicon gelatin composite », dans JOURNAL OF COLLOID AND INTERFACE SCIENCE, ACADEMIC PRESS, NY, US, Vol. 310, n°2, 27 avril 2007, pages 353-361, décrit l'utilisation d'un matériau composite inorganique-organique pour l'extraction du Cn(IV) de l'eau. Ce matériau est préparé par solidification d'un organogel polymérique, ce dernier servant juste de gabarit lors de la première étape de préparation du matériau. Le composite final est obtenu par gélification d'une phase organique (pentanol/hexane) avec des globules de gélatine en inclusion, suivie d'une polymérisation du tétraéthoxysilane présent dans la phase gel, puis d'un séchage du matériau composite conduisant à un produit composite solide. Ce document n'enseigne nullement un organogel microporeux et son utilisation, mais un matériau composite inorganique-organique.

Ces organogels microporeux constituent donc une nouvelle famille de matériaux ayant la double propriété d'adsorption et de solubilisation qui rend unique ces matériaux dans le domaine de l'adsorption.

Les organogels sont des matériaux semi-solides consistant en un liquide organique ou une huile, immobilisés par un réseau tridimensionnel de fibres résultant de l'auto-assemblage d'un organogélifiant polymère ou d'un organogélifiant de faible masse moléculaire, de préférence un organogélifiant de faible masse moléculaire.

Les gels selon la présente invention présentent par ailleurs l'avantage de passer de manière réversible d'un état solide à un état liquide.

L'organogélifiant de faible masse moléculaire correspond à une petite molécule organique capable de gélifier à de faibles proportions une large gamme de liquides organiques. Par faible masse moléculaire, on entend une masse moléculaire inférieure à 1000 g/mol, et plus particulièrement inférieure à 500 g/mol.

Il est à noter que la teneur en organogélifiant contrôle la tenue thermique de l'organogel mais aussi sa résistance mécanique. Ainsi, ce paramètre permet d'adapter facilement le matériau en fonction des contraintes liées à son utilisation.

De plus, la polarité de l'organogel dépend du liquide organique ou de l'huile à gélifier. Le paramètre de lipophilie est le paramètre qui contrôle la cinétique de capture et/ou de libération des fluides et peut être ajusté dans le cas des organogels en choisissant des liquides organiques ou des huiles à gélifier appropriées choisies en fonction de leur valeur de log P.

De ce fait, l'utilisation d'une huile végétale présentant un fort caractère hydrophobe permettra l'obtention d'un organogel hydrophobe.

Les organogels microporeux sont utilisés dans les domaines cosmétique, pharmaceutique, ou alimentaire et présentent l'avantage de pouvoir contenir des ingrédients ou principes actifs pour faciliter l'introduction, et la stabilité desdits ingrédients ou principes actifs dans des compositions.

Plus particulièrement, les organogels microporeux peuvent être utilisés dans le génie tissulaire afin d'élaborer des matrices extracellulaires artificielles comme décrits dans la thèse de Lukyanova, 22 janvier 2009 : « Préparation de matrices microporeuses d'organogels et évaluation en culture cellulaire » et dans l'article de Lukyanova et al. : « Colloids and Surfaces B » ; Biointerfaces, 2010, 79, 105-112.

Ces organogels microporeux sont obtenus *via* le procédé décrit dans la thèse de Lukyanova et dans l'article de Lukyanova et al. : « Soft Microporous Green Materials from Natural Soybean Oil»; ChemSusChem, 2008, 1, 514-518.

Pour l'élaboration de ces organogels, un organogélifiant particulièrement adapté est l'acide 12-hydroxystéarique (HSA) dérivé de l'huile de ricin. Plus particulièrement, l'acide 12-hydroxystéarique peut former des organogels avec des liquides organiques aliphatique, alicyclique ou aromatique. Il peut également former des organogels avec des huiles végétales telles que l'huile de tournesol ou l'huile de soja.

Une méthode de dissolution aqueuse d'un gabarit de particules solides hydrosolubles de dimension calibrée permet d'introduire une microporosité contrôlée à l'intérieur des organogels. Ces particules solides hydrosolubles sont plus communément appelées porogènes.

Pour l'obtention de l'organogel microporeux, une première étape consiste à préparer des gabarits à base de porogènes solubles dans l'eau, notamment des sucres comme par exemple du saccharose ou du sucre glace ou des sels comme par exemple du chlorure de sodium, par agglomération avec un minimum d'eau. La pâte obtenue est ensuite pressée dans un moule puis séchée pour obtenir des gabarits compacts de porogènes.

Dans une seconde étape, ces gabarits compacts de porogènes sont immergés dans l'organogel fondu se présentant sous forme liquide.

Après imprégnation, le mélange est refroidi et les gabarits imprégnés 'organogel sont immergés dans l'eau distillée à température ambiante jusqu'à une complète dissolution des particules de porogènes formant ainsi les pores au sein de l'organogel.

Le tableau 1 suivant rassemble les données correspondant à la distribution de taille des pores ainsi que la porosité effective en fonction de la nature du porogène, de l'huile et de la teneur initiale en eau dans le gabarit.

**Tableau 1. Composition et caractéristiques des matrices à base de triglycérides caprique/caprylique et d'huile de soja.**

| Organogel | Agent porogène | Teneur initiale en eau, % mass. | Distribution de la taille des pores (moyenne) [a], µm | Porosité effective [b], % |
|---|---|---|---|---|
| Triglycérides caprique/caprylique (15% mass. HSA) [c] | Sucre | 3,5 | 25-400 (220) | 65,2 ± 1,5 |
| | | 2 | 25-500 (290) | 64,3 ± 0,4 |
| | Sel (NaCl) | 3,5 | 25-500 (230) | 61,9 ± 1,6 |
| | | 2 | 25-500 (230) | 59,9 ± 1,3 |
| | Sel (NaCl) | 3,5 | 25-300 (150) | 60,2 ± 1,0 |
| | | 2 | 25-350 (150) | 61,7 ± 1,5 |
| | Sucre glace | 3,5 | 10-75 (30) | 66,3 ± 1,7 |
| | | 2 | 10-60 (40) | 59,7 ± 1,1 |
| Huile de soja (7,5% mass. HSA) [c] | Sucre | 3,5 | 25-400 (220) | 64,5 ± 1,2 |
| | | 2 | 25-500 (270) | 60,9 ± 0,8 |
| | Sel (NaCl) | 3,5 | 25-500 (230) | 61,1 ± 1,9 |
| | | 2 | 25-550 (230) | 55,7 ± 2,1 |
| | Sucre glace [d] | 3,5 | 10-70 (30) | 64,1 ± 0,9 |
| | | 2 | 10-60 (40) | 57,9 ± 1,3 |
| [a] Déterminée par analyse d'image ; [b] mesurée par déplacement de liquide ; [c] matrices avec 30% HSA pour les triglycérides caprique/caprylique et 15% HSA pour l'huile de soja donnent des résultats identiques ; [d] organogel d'huile de soja à base de sucre glace avec 15% mass. de HSA. | | | | |

Ces nouveaux organogels microporeux tels qu'ils sont caractérisés dans le tableau 1 ont montré une bonne biodégradabilité. De plus, la tenue mécanique de ces matrices poreuses est tout à fait adaptée pour la reconstruction de tissus mous. Des tests biologiques in vitro sur ces organogels microporeux ont permis d'évaluer leur capacité en tant que matrice extracellulaire artificielle pour la culture de fibroblastes. Il a également été mis en évidence que ces matrices se révèlent aptes à maintenir la survie et la prolifération des cellules sur une longue période de 21 jours. En conclusion, il a été mis en évidence le potentiel de ces nouveaux organogels microporeux en tant que matrices artificielles extracellulaires pour le génie tissulaire. Rien ne laissait donc préjuger que ces organogels microporeux pouvaient être utilisés dans le domaine de la capture des fluides.

La présente invention a donc pour objet l'utilisation d'un organogel microporeux pour la capture de fluides par adsorption et/ou pour la libération contrôlée de fluides après solubilisation.

Avantageusement, les fluides sont concentrés dans l'organogel microporeux.

Selon un aspect particulier de l'invention, les fluides contiennent des composés organiques.

On entend par concentration d'un fluide dans l'organogel microporeux une augmentation de la quantité de matière du fluide au sein de l'organogel microporeux entraînant une diminution d'une quantité de matière équivalente de fluide dans le milieu extérieur (eau ou air). La concentration est donc prise au sens du coefficient de partage d'un fluide entre l'eau ou l'air et l'organogel microporeux.

L'adsorption repose sur la propriété qu'ont des surfaces solides ou gélifiées de fixer des molécules de gaz ou de liquides de manière réversible, par des liaisons faibles de type Van der Walls.

Les fluides adsorbés en surface sont solubilisés au sein de l'organogel de par sa nature de liquide gélifié.

On entend par libération contrôlée l'isolement du fluide adsorbé après solubilisation de l'organogel microporeux. Le mécanisme de libération contrôlée est basé sur le coefficient de partage huile/eau ou huile/air du fluide mais également sur le réseau fibreux de l'organogel microporeux dont la densité et le maillage limite la libre diffusion.

On entend par composé organique, une molécule comprenant au moins un atome de carbone.

Dans un aspect particulier de l'invention, les fluides contiennent des agents polluants de l'air ou de l'eau, notamment des hydrocarbures et/ou des métaux lourds.

Les agents polluants au sens de la présente invention sont des molécules qui, au-delà d'un certain seuil, développent des impacts négatifs sur un écosystème ou sur l'environnement en général. Typiquement, les agents polluants peuvent être des hydrocarbures qui sont des composés organiques contenant exclusivement des atomes de carbone et d'hydrogène. Les agents polluants peuvent également être des métaux lourds qualifiés ainsi du fait de leur densité élevée. On peut citer par exemple le plomb, le cadmium, le mercure, l'arsenic, le chrome, le nickel, le cuivre, le zinc.

Ainsi, dans un domaine d'application particulièrement avantageux de l'invention, l'organogel microporeux est utilisé pour la capture d'agents polluants.

En effet, de nombreuses activités humaines et industrielles sont sources de polluants organiques et hydrophobes tels que des pesticides, des herbicides, ou encore des hydrocarbures et des huiles automobiles (lubrifiants, liquides de frein, fluides hydrauliques). Certaines pollutions de surface sont très visibles, notamment les détergents qui moussent à la surface de l'eau ou encore les marées noires qui sont de véritables catastrophes écologiques.

Toutefois, il existe une pollution de surface sous-évaluée, mal identifiée dans sa composition, et donc beaucoup plus insidieuse.

Ces derniers types de polluants sont souvent moins denses que l'eau, et constituent alors une pollution de surface. Les polluants hydrophobes peuvent également se présenter sous forme émulsionnée obtenue après cisaillement par le vent ou la pluie. Cette forme émulsionnée est métastable et redonnera après crémage, un film de surface.

En effet, les pellicules ou films hydrophobes de surface peuvent se révéler très polluants. La mince couche interfaciale se situant entre l'eau et l'air, appelée neuston, constitue la porte de communication entre ces deux environnements et sa détérioration peut avoir de graves conséquences au niveau de leurs échanges. Cette interface peut accumuler les polluants hydrophobes en surface, ces derniers ayant un effet barrière physique et chimique plus ou moins important.

Le neuston correspond à la surface des eaux océaniques et continentales et occupe plus de 70 % de la superficie mondiale et sa biodiversité compte plusieurs milliers d'espèces. La pollution qui s'y accumule peut donc avoir de graves conséquences pour les organismes qui y vivent. Par ailleurs, le mélange de tous ces polluants, étalés et concentrés en couche mince, est exposé à un rayonnement intense pouvant conduire à d'autres polluants encore plus nocifs.

De plus, les polluants de surface sont majoritairement des résidus non-volatils d'hydrocarbures (essence, gasoil) ou huiles d'automobiles (lubrifiants moteurs, liquide de frein, fluides hydrauliques). L'accumulation de ces polluants dans les eaux pluviales provenant de réseaux routiers, d'aéroports ou d'installations portuaires, interpelle quant aux répercussions possibles sur la santé publique et la biodiversité des milieux aquatiques.

Par ailleurs, la caractérisation et la quantification de ces polluants hydrophobes de surface n'est pas aisée. En effet, ces polluants restent très difficiles à capter. Cette difficulté est liée au fait que ces polluants s'étendent sur de très grandes surface, souvent en films très fins, et que les méthodes classiques de prélèvement d'eau ne permettent d'en récolter qu'une infime proportion, souvent indétectable. Ainsi, bien que la présence de ces polluants de surface soit avérée, on ne connaît pas précisément l'étendue et leur composition ainsi que tous les impacts qu'ils peuvent avoir sur l'environnement.

Dans ce contexte, l'organogel microporeux utilisé dans la présente invention est particulièrement adapté du fait de sa faible densité, notamment inférieure à celle de l'eau, entraînant ainsi une capacité de flottaison. L'organogel microporeux peut donc adsorber et solubiliser en grande quantité divers types de polluants hydrophobes présents dans l'eau, émulsionnés ou en films minces à la surface.

Selon un autre aspect de l'invention, les fluides sont des substances volatiles, particulièrement des gaz ou des vapeurs, et préférentiellement des phéromones d'insectes, des arômes de plantes, de fleurs ou de résines.

Le pouvoir des graisses et des huiles à adsorber les odeurs fut constaté dès l'antiquité. Cette méthode permit l'exploitation des arômes des plantes pendant des centaines d'années. Ce procédé appelé enfleurage à froid était réservé aux fleurs fragiles et est notamment décrit dans l'article de Lawrence et al. : Progress in essentials oils, Perfumer & flavorist 1994, 19(5), 83. Le principe repose sur une solubilité des molécules odoriférantes plus grande dans l'huile que dans le végétal, avec un transfert naturel des odeurs de la plante à la graisse ou à l'huile.

Ainsi, l'organogel microporeux selon l'invention est particulièrement intéressant du fait qu'il constitue un corps gras microporeux présentant une surface spécifique très élevée favorisant l'adsorption.

Typiquement, l'organogel microporeux utilisé dans le cadre de la présente invention est hydrophobe. On entend par hydrophobe le fait que le liquide gélifié est apolaire ou de faible polarité, et qu'il ne peut établir de liaisons ou d'interactions avec l'eau.

Particulièrement, l'organogel microporeux utilisé dans le cadre de la présente invention possède une porosité comprise entre 10 % et 90 %, de préférence entre 55 et 70%.

Le pourcentage de porosité de l'organogel microporeux est obtenu et calculé selon le procédé suivant :
- L'organogel microporeux saturé en eau est pesé et une masse M1 est obtenue.
- L'organogel microporeux est ensuite déshydraté par lyophilisation puis est pesé à nouveau et une masse M2 est obtenue.
- La masse d'eau piégée M0 est égale à M1-M2.
- Le volume occupé par l'eau V1 est égal à M0/dl (dl = masse volumique de l'eau)
- Le volume occupé par l'organogel est égal à M2/d2 (d2 = masse volumique de l'organogel)
- Le pourcentage de porosité est égal à (V1/(V1+V2)) x 100.

Plus particulièrement, le diamètre moyen des pores de l'organogel microporeux utilisé dans le cadre de la présente invention est compris entre 0,5 µm et 550 µm, avantageusement entre 1 µm et 550 µm, plus avantageusement entre 10 µm et 550 µm, plus avantageusement encore entre 50 µm et 450 µm, de préférence entre 100 µm et 300 µm. de manière particulièrement avantageuse, le diamètre moyen des pores de l'organogel microporeux est d'environ 220 µm.

L'invention concerne également l'utilisation d'un organogel microporeux, tel qu'il est défini ci-dessus, obtenu à partir d'un procédé comprenant une étape de préparation de l'organogel et une étape de formation de pores dans ledit organogel, notamment par dissolution aqueuse d'un gabarit de particules solides hydrosolubles de dimension calibrée, préalablement imprégné d'organogel, de préférence des sucres, avantageusement du saccharose, ou des sels, avantageusement du chlorure de sodium.

Avantageusement, l'organogel microporeux est élaboré à partir d'un organogélifïant, notamment l'acide 12-hydroxystéarique et d'un liquide organique non miscible à l'eau, notamment une huile, de préférence l'huile de soja.

L'invention concerne aussi l'utilisation d'un organogel microporeux tel qu'il est défini ci-dessus dans un procédé d'analyse des fluides capturés, notamment par chromatographie liquide ou gazeuse, et/ou par spectrométrie de masse et/ou comme support pour une extraction en phase solide (SPE). Plus particulièrement, l'invention a pour objet un procédé d'analyse des fluides capturés comprenant l'utilisation d'un organogel microporeux selon l'invention et l'analyse des fluides capturés, notamment par chromatographie liquide ou gazeuse, et/ou par spectrométrie de masse et/ou comme support pour une extraction en phase solide (SPE).

Avantageusement, l'analyse des fluides capturés est réalisée par simple dissolution de l'organogel utilisé dans le cadre de la présente invention dans un solvant approprié.

Par solvant approprié, on peut citer les solvants organiques, notamment le tétrahydrofurane.

L'invention concerne également tout capteur de fluides qui a été mis sous une forme appropriée par moulage d'un organogel microporeux tel qu'il est défini ci-dessus.

Par forme appropriée, on entend une forme géométrique du capteur adaptée en fonction de la zone et du milieu de capture des fluides. Ainsi, une forme en disque ou en plaque est très bien adaptée à la capture de fluides à la surface de l'eau mais beaucoup moins pour une capture plus en profondeur. Dans ce cas, une forme de sphère ou de cylindre est préférentielle.

Ainsi, l'utilisation d'un organogel microporeux, tel qu'il est défini ci-dessus, pour la capture de fluides présente de nombreux avantages/

En effet, sa double propriété unique d'adsorption et de solubilisation permet de capter et d'accumuler des quantités importantes de fluides. La technique d'élaboration de l'organogel microporeux est propre et peu coûteuse et permet un contrôle de la porosité en ajustant le volume poreux et la taille des pores. Cette technique d'élaboration permet également d'ajuster la densité et la polarité de l'organogel microporeux en fonction de la nature des liquides gélifiés et de leur mélange, ainsi que par le choix de l'organogélifïant.

Les ingrédients utilisés pour l'obtention de l'organogel microporeux sont issus de ressources renouvelables et le procédé d'obtention est respectueux de environnement.

Les organogels microporeux permettent également une analyse directe des fluides captés par simple dissolution dans un solvant approprié.

Les exemples qui suivent servent à illustrer l'invention, mais ne la limite en aucune manière.
La figure 1 représente une courbe cinétique de captage à 25 °C d'un film de dodécane coloré.
La figure 2 représente un chromatogramme d'arômes de lavande capturés par l'organogel microporeux utilisé selon l'invention.
La figure 3 représente un chromatogramme des fluides capturés par différentes pastilles d'organogel microporeux utilisé selon l'invention.

### EXEMPLE A : Démonstration de capture d'un film d'hydrocarbure à la surface de l'eau.

Hydrocarbure modèle : Dodécane coloré au rouge vermillon (5% v/v)
Capteur : pastille d'organogel microporeux (huile de soja, organogélifiant HSA (15% en masse), gabarit sucre).

Caractéristiques de la pastille : Pastille déshydratée,
diamètre = 30 mm, épaisseur = 5 mm
Porosité moyenne 67%,
diamètre moyen des pores 220 µm.

### Protocole de captage et suivi cinétique :

On forme à la surface de l'eau un film de dodécane coloré de 1 mm d'épaisseur. Sur ce film est déposée une pastille dont on va filmer la coloration au cours du temps. Un logiciel d'analyse d'image permet de faire un suivi cinétique d'adsorption par photodensitométrie.

### Résultats :

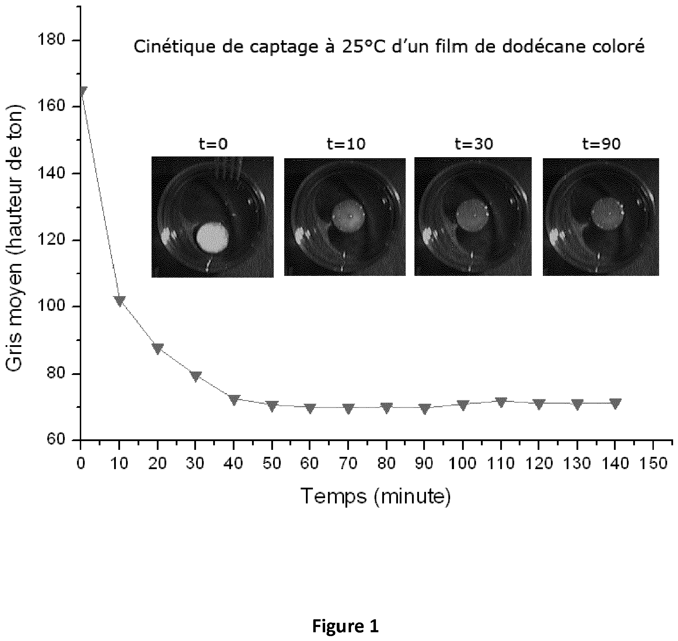

La courbe cinétique (Figure 1) montre une rapide adsorption du film de dodécane avec un palier au bout de 60 mn.

Remarque : Une pastille non déshydratée présente les mêmes capacités d'adsorption avec une cinétique légèrement plus lente (pallier au bout de 75 mn)

### EXEMPLE B : Démonstration de capture de polluants de surface sur le terrain

Site testé : Lac du Perget à Colomiers (31770)
Capteur : pastille d'organogel microporeux (huile de soja, organogélifiant HSA (15% en masse), gabarit sucre).

Caractéristiques de la pastille : Pastille déshydratée, diamètre = 30 mm, épaisseur = 5 mm, porosité moyenne 67%, diamètre moyen des pores 220 µm.

### Protocole de captage :

La pastille est déposée à la surface de l'eau à l'intérieur d'un cerceau flottant (30 cm de diamètre), afin de délimiter une surface de captage. La pastille est récupérée au bout de 2 heures.

Témoins : Pastille n'ayant pas captée.

### Analyse GC :

Analyses HPLC-UV réalisées sur un système Alliance 2695, avec PDA 996, sur colonne Xbridge Shield RP18, 2,1x100 mm, 3.5µm. Gradient T0 : 100% H₂0, T60 min: 100% ACN, débit 0,3 mL/min. Analyse UV à 230 nm. Solubilisation de la pastille dans 1 mL THF, injection 10 µL.

### Résultats :

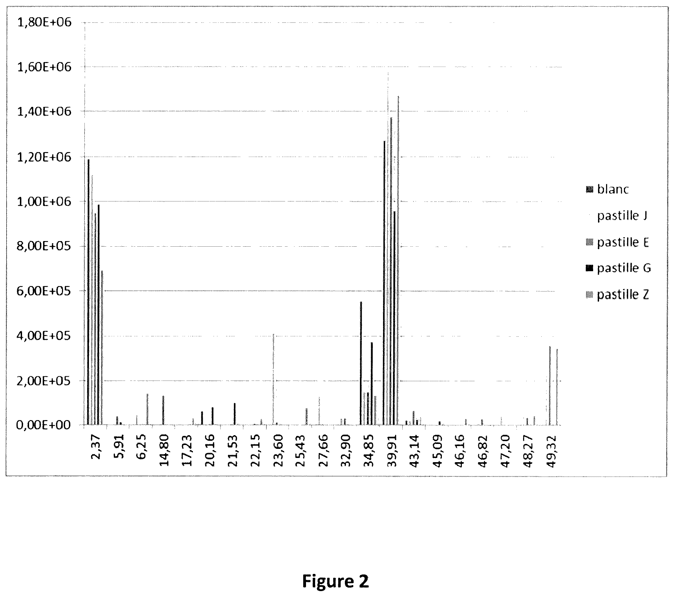

La figure 2 montre que sur les différentes pastilles analysées (pastilles J, E, G et Z), entre 2 et 8 pics caractéristiques d'une pollution de surface sont identifiés, puisqu'ils ne sont pas retrouvés dans l'analyse de la pastille témoin (blanc).

### EXEMPLE C : Démonstration de capture d'odeur

Plante testée : Lavande vraie (Lavandula angustifolia), fleurs fraîches et huile essentielle.

Capteur : pastille d'organogel microporeux (huile de soja, organogélifiant HSA (15% en masse), gabarit sucre).

Caractéristiques de la pastille : Pastille déshydratée, diamètre = 30 mm, épaisseur = 5 mm, porosité moyenne 67%, diamètre moyen des pores 220 µm.

### Protocole de captage :

Pastille suspendue au-dessus des fleurs dans un bocal hermétiquement clos, pendant 1 heure à 25°C.

Témoins : Pastille sans captage et injection directe de l'huile essentielle.

### Analyse GC :

Les pastilles après captage sont dissoutes dans 1 ml de THF, et analysées en chromatographie en phase gaz couplée à une détection par spectrométrie de masse.

### Résultats :

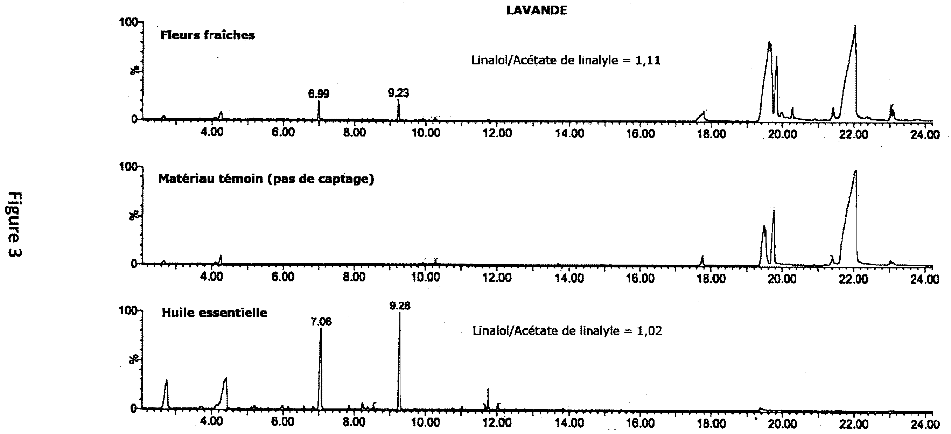

Le chromatogramme présenté dans la figure 3 correspond à 3 analyses, l'huile essentielle directement injectée, une pastille témoin, et un captage sur des fleurs fraîches.

Les pics à 7,0 et 9,2 minutes correspondent respectivement au linalol (L) et à l'acétate de linalyle (AL), les 2 principales molécules odorantes de la lavande. Leur présence confirme l'efficacité adsorbante du matériau sur des composés volatils. Les rapports de ces 2 pics (L/AL) sont équivalents dans l'huile essentielle et sur la capture de fleurs fraîches, ce qui indique qu'après adsorption dans le matériau la signature olfactive est conservée.

### EXEMPLE D : Préparation de l'organogel microporeux

### 1. Préparation de l'organogel

Des concentrations fixes de gels sont obtenues en ajoutant des quantités pesées d'acide 12-hydroxystéarique à l'huile de soja et le mélange est chauffé à 70°C (>T°gélification). La solution est refroidie à température ambiante et un gel est obtenu. L'état de gel est confirmé par le test du flacon retourné.

### 2. Formation des pores

Des gabarits de particules de porogènes agglomérées (saccharose, chlorure de sodium) sont préparés par mélange des particules de porogènes avec 2 ou 3,5% en masse d'eau distillée. Le mélange pâteux est pressé manuellement dans un moule en Teflon® et séché pendant 30 à 35 minutes à 80°C. Les gabarits de particules de porogènes agglomérées sont ensuite immergés dans l'organogel fondu à une température de 70°C (>T°gélification), et laissés pendant 12 à 15 minutes pour une bonne imprégnation des gabarits. Après refroidissement à température ambiante, les modèles imprégnés et gélifiés sont immergés à température ambiante dans de l'eau distillée renouvelée tous les jours pendant 7 jours pour dissoudre les particules de porogènes puis séchés à l'air.

## Revendications

1. Utilisation d'un organogel microporeux pour la capture de fluides par adsorption et/ou pour la libération contrôlée de fluides après solubilisation.

2. Utilisation selon la revendication 1, **caractérisée en ce que** les fluides sont concentrés dans l' organogel microporeux.

3. Utilisation selon la revendication 1, **caractérisée en ce que** les fluides contiennent des composés organiques.

4. Utilisation selon la revendication 1, **caractérisée en ce que** les fluides contiennent des agents polluants de l'air ou de l'eau.

5. Utilisation selon la revendication 1, **caractérisée en ce que** les fluides sont des substances volatiles.

6. Utilisation selon l'une quelconque des revendications 1 à 5, **caractérisée** en ce l'organogel microporeux est hydrophobe.

7. Utilisation selon l'une des revendications 1 à 6, **caractérisée en ce que** l'organogel microporeux a une porosité comprise entre 10 % et 90 %.

8. Utilisation selon l'une des revendications 1 à 7, **caractérisée en ce que** le diamètre moyen des pores de l'organogel microporeux est compris entre 0,5 µm et 550 µm.

9. Utilisation selon les revendications 1 à 8, **caractérisée en ce que** l'organogel microporeux est obtenu à partir d'un procédé comprenant une étape de préparation de l'organogel et une étape de formation de pores dans ledit organogel.

10. Utilisation selon la revendication 9, **caractérisée en ce que** l'organogel microporeux est élaboré à partir d'un organogélifiant.

11. Procédé d'analyse des fluides capturés comprenant l'utilisation d'un organogel microporeux telle que définie dans les revendications 1 à 10, et l'analyse des fluides capturés par chromatographie liquide ou gazeuse et/ou par spectrométrie de masse et/ou comme support pour une extraction en phase solide (SPE).

12. Procédé selon la revendication 11, **caractérisée en ce que** l'analyse des fluides capturés est réalisée par simple dissolution dudit organogel microporeux dans un solvant approprié.

## Patentansprüche

1. Verwendung eines mikroporösen Organogels für das Auffangen von Fluiden durch Adsorption und/oder für die kontrollierte Freisetzung von Fluiden nach Solubilisierung.

2. Verwendung nach Anspruch 1, **dadurch gekennzeichnet, dass** die Fluide in dem mikroporösen Organogel konzentriert sind.

3. Verwendung nach Anspruch 1, **dadurch gekennzeichnet, dass** die Fluide organische Verbindungen enthalten.

4. Verwendung nach Anspruch 1, **dadurch gekennzeichnet, dass** die Fluide luft- oder wasserverschmutzende Mittel enthalten.

5. Verwendung nach Anspruch 1, **dadurch gekennzeichnet, dass** die Fluide flüchtige Substanzen sind.

6. Verwendung nach einem der Ansprüche 1 bis 5, **dadurch gekennzeichnet, dass** das mikroporöse Organogel hydrophob ist.

7. Verwendung nach einem der Ansprüche 1 bis 6, **dadurch gekennzeichnet, dass** das mikroporöse Organogel eine Porosität hat, die zwischen 10 % und 90 % liegt.

8. Verwendung nach einem der Ansprüche 1 bis 7, **dadurch gekennzeichnet, dass** der mittlere Durchmesser der Poren des mikroporösen Organogels zwischen 0,5 µm und 550 µm liegt.

9. Verwendung nach den Ansprüchen 1 bis 8, **dadurch gekennzeichnet, dass** das mikroporöse Organogel anhand eines Verfahrens gewonnen wird, das einen Schritt der Herstellung des Organogels und einen Schritt der Bildung der Poren in dem Organogel umfasst.

10. Verwendung nach Anspruch 9, **dadurch gekennzeichnet, dass** das mikroporöse Organogel auf der Basis eines organischen Geliermittels entwickelt wird.

11. Verfahren zur Analyse aufgefangener Fluide, umfassend die Verwendung eines mikroporösen Organogels nach einem der Ansprüche 1 bis 10 und die Analyse der aufgefangenen Fluide durch Flüssig- oder Gaschromatographie und/oder durch Massenspektrometrie und/oder als Träger für eine Festphasenextraktion (SPE).

12. Verfahren nach Anspruch 11, **dadurch gekennzeichnet, dass** die Analyse der aufgefangenen Fluide durch einfaches Auflösen des mikroporösen Organogels in einem geeigneten Lösungsmittel erfolgt.

## Claims

1. Use of a microporous organogel for the trapping of fluids by adsorption and/or for the controlled release of fluids after solubilization.

2. Use according to claim 1, **characterized in that** the fluids are concentrated in the microporous organogel.

3. Use according to claim 1, **characterized in that** the fluids contain organic compounds.

4. Use according to claim 1, **characterized in that** the fluids contain air or water polluting agents.

5. Use according to claim 1, **characterized in that** the fluids are volatile substances.

6. Use according to anyone of claims 1 to 5, **characterized in that** the microporous organogel is hydrophobic.

7. Use according to anyone of claims 1 to 6, **characterized in that** the microporous organogel has a porosity of between 10% and 90%.

8. Use according to anyone of claims 1 to 7, **characterized in that** the mean diameter of the pores of the microporous organogel is between 0.5 µm and 550 µm.

9. Use according to anyone of claims 1 to 8, **characterized in that** the microporous organogel is obtained using a method comprising a step of preparing the organogel and a step of forming pores in said organogel.

10. Use according to claim 9, **characterized in that** the microporous organogel is prepared from an organogelator.

11. A method for analyzing trapped fluids, comprising the use of a microporous organogel defined in claims 1 to 10 and the analysis of trapped fluids by liquid or gas chromatography, and/or by mass spectrometry and/or as substrate for solid-phase extraction (SPE).

12. The method according to claim 11, **characterized in that** the analysis of the trapped fluids is carried out by simple dissolution of said microporous organogel in a suitable solvent.
